(19) Europäisches Patentamt
European Patent Office
Office européen des brevets

(11) EP 3 088 476 B1

(12) EUROPEAN PATENT SPECIFICATION

(45) Date of publication and mention of the grant of the patent:
29.11.2017 Bulletin 2017/48

(51) Int Cl.:
C09D 5/00 (2006.01)          C09D 5/33 (2006.01)
C09D 5/02 (2006.01)          C09D 133/08 (2006.01)
C09D 133/10 (2006.01)        C09D 175/04 (2006.01)
C09D 133/06 (2006.01)        E04F 13/02 (2006.01)
E01F 9/518 (2016.01)

(21) Application number: 16166751.4

(22) Date of filing: 22.04.2016

(54) **DURABLE AQUEOUS COMPOSITIONS FOR USE IN MAKING TRAFFIC MARKINGS HAVING GOOD DIRT PICKUP RESISTANCE AND TRAFFIC MARKINGS MADE THEREWITH**

DAUERHAFTE WÄSSRIGE ZUSAMMENSETZUNGEN ZUR VERWENDUNG BEI DER HERSTELLUNG VON STRASSENMARKIERUNGEN MIT GUTEM SCHMUTZAUFNAHMEWIDERSTAND UND STRASSENMARKIERUNGEN DAMIT

COMPOSITIONS AQUEUSES DURABLES POUR UNE UTILISATION DANS LA FABRICATION DE MARQUAGES DE SIGNALISATION AYANT UNE BONNE RÉSISTANCE À L'ENCRASSEMENT ET MARQUAGES DE SIGNALISATION FABRIQUÉS À PARTIR DE CEUX-CI

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 30.04.2015 US 201562155092 P

(43) Date of publication of application:
02.11.2016 Bulletin 2016/44

(73) Proprietor: Rohm and Haas Company
Philadelphia, PA 19106 (US)

(72) Inventors:
• CHAILLOUX, Loic
  06560 Valbonne (FR)
• CLAMEN, Guy
  06560 Valbonne (FR)
• GREYSON, Eric C.
  Collegeville, PA 19426 (US)
• HAIGH, John
  06560 Valbonne (FR)
• POLLET, Bruno
  06560 Valbonne (FR)

(74) Representative: Murgitroyd & Company
Scotland House
165-169 Scotland Street
Glasgow G5 8PL (GB)

(56) References cited:
EP-A1- 1 362 896          US-A1- 2003 119 945
US-A1- 2009 318 596

EP 3 088 476 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to aqueous binder compositions useful for making traffic markings that comprise one or more vinyl or acrylic emulsion polymers, from 3 to 15 wt.%, pref. 6-12 wt.%, based on total polymer solids, of one or more polyurethane dispersions (PUD), one or more high boiling point coalescent, and one or more fillers, extenders and/or pigments, wherein the composition has a percent pigment volume concentration (%PVC) of from 40 to 80%, or, preferably, 45 to 65%. More particularly, it relates to such aqueous compositions comprising the one or more vinyl or acrylic emulsion polymers, the one or more PUDs, the one or more high boiling point coalescents, and a pigment, such as a white or opacifier pigment, combined with one or more fillers and/or extenders.

Waterborne or aqueous traffic paint is a popular, environmentally friendly and economical material for use in making roadways safer. Known aqueous traffic paint binders enable a good balance of fast dry time and good paint stability. However, over time the paint applied to the road tends to discolor or lose whiteness, which can reduce visibility. Accordingly, there remains a need in the industry to develop a quick drying, one component composition useful as an aqueous traffic paint having improved early dirt pickup resistance and overall whiteness retention.

U.S. patent publication 2009/0318596A, to Fu et al. (Fu), discloses aqueous compositions exhibiting early coating hardness and including a polyurethane or a polyurethane dispersion (PUD); however, the Fu compositions provide clearcoats (0 %PVC) or pigmented compositions that have a %PVC of below 20%. The disclosed compositions would not dry quickly enough to make a useful traffic paint composition; further, the disclosed compositions do not provide improved dirt pickup resistance and overall whiteness retention.

Accordingly, the present inventors have sought to solve the problem of providing an economical aqueous composition for use in making traffic paint which provides at the same time reducing the cost in use to the applicator.

SUMMARY OF THE INVENTION

1. In accordance with the present invention, aqueous compositions useful for making traffic markings comprise (i) one or more vinyl or acrylic emulsion polymers having a measured glass transition temperature (measured Tg) of from -10 to 60 °C, or, preferably, from 20 to 60 °C, or, more preferably, from 30 to 60 °C, (ii) from 3 to 15 wt.%, pref. 6-12 wt.%, as solids, based on total polymer solids, of one or more polyurethane dispersions (PUD), (iii) one or more coalescent having a normal boiling point of from 150 to 300 °C, preferably, an isobutyrate ester, and (iv) one or more fillers, extenders and/or pigments, wherein the composition has a percent pigment volume concentration (%PVC) of from 45 to 80%, or, preferably, from 45 to 65%.

2. The aqueous compositions in accordance with 1, above, wherein the (i) one or more vinyl or acrylic emulsion polymer is an acrylic emulsion polymer, preferably, comprising butyl acrylate in polymerized form.

3. The aqueous compositions in accordance with 1 or 2, above, wherein the (i) one or more vinyl or acrylic emulsion polymer is an anionically stabilized emulsion polymer and, wherein the composition further comprises one or more polyamine and one or more volatile base, such as ammonia, an alkyl amine, such as ethyl amine amine alcohols, or, preferably, ammonia.

4. The aqueous compositions in accordance with 3, above, wherein the amount of the one or more polyamine ranges from 0.1 to 2 wt.% or, preferably, from 0.25 to 1.5 wt.% solids based on total polymer solids.

5. The aqueous compositions in accordance with 3 or 4, above, wherein the composition has a pH of 8.0 to 11, or, preferably, 9.0 to 11.

6. The aqueous compositions in accordance with any of 1, 2, 3, 4 or 5, above, wherein the (iii) one or more high boiling coalescent is chosen from diacid esters, phosphate esters, isobutyrate esters, alkyl esters of fatty acids, fatty ethers, fatty glycerides, fatty acid amides, alkoxylates of fatty acids, addition (co)polymer coalescents, ethylene and propylene glycol ethers having a normal boiling point of 150 to 300 °C, and mixtures thereof, preferably, isobutyrate esters. The amount of the coalescent may range from 4.0 wt.% to 30 wt.%, based on total polymer solids or, preferably, from 5 to 20 wt.%.

7. The aqueous compositions in accordance with any of 1, 2, 3, 4, 5 or 6, above, wherein the (iv) one or more fillers, extenders and/or pigments comprises, a pigment, such as a white or opacifier pigment, preferably, titanium dioxide, combined with one or more fillers and/or extenders, preferably calcium carbonate, calcium oxide, silica, silicates, and combinations thereof.

8. The aqueous compositions in accordance with any of 1, 2, 3, 4, 5, 6, or 7, above, comprising a low volatile organic compound (VOC) level, such as 110 g/L or less, or, preferably, 105 g/L or less.

9. The aqueous compositions in accordance with any of 1, 2, 3, 4, 5, 6, 7, or 8, above, wherein the compositions have a pH of 7.5 to 11, or, preferably, 9.0 or 11.

10. In accordance with another aspect of the present invention, methods of making traffic markings or other coated substrates comprise applying the aqueous compositions of any of 1, 2, 3, 4, 5, 6, 7, 8, or 9, above, to (a) a road, paved or concrete surface and allowing it to dry to form a traffic marking, or to (b) a concrete surface or a building surface and allowing it to dry to form a coated substrate.

11. In accordance with yet another aspect of the present invention, coated substrates comprise the traffic markings or coated substrates formed by the methods of 10, above.

All ranges recited are inclusive and combinable. For example, a recitation of a %PVC of from 40 to 80%, or, preferably, from 45 to 65%, means all of a %PVC of from 40 to 80%, from 40 to 45%, from 40 to 65%, from 45 to 80%, from 65 to 80%, and, preferably, from 45 to 65%.

Unless otherwise indicated, conditions of temperature and pressure are room temperature and standard pressure, also referred to herein as "ambient conditions".

The singular forms "a," "an," and "the" include plural referents unless the context clearly dictates otherwise.

All phrases comprising parentheses denote either or both of the included parenthetical matter and its absence. For example, the phrase "(meth)acrylate" includes, in the alternative, acrylate and methacrylate.

As used herein, the term "acid monomer or anionic monomer" means ethylenically unsaturated carboxylic acid monomer in either the acid or anionic form (COO$^-$).

As used herein, the term "aqueous" means water or water mixed with up to 16 wt.%, or up to 6 wt.%, or, preferably, up to 0.5 wt.% of a water miscible solvent which is volatile under ambient conditions, such as a lower alkanol.

As used herein, unless otherwise indicated, the term "calculated Tg" or "glass transition temperature" refers to the Tg of a polymer calculated by using the Fox equation (T. G. Fox, Bull. Am. Physics Soc., Volume 1, Issue No. 3, page 123 (1956)).

As used in the claims and elsewhere herein, unless otherwise indicated, the phrase "measured glass transition temperature" or "measured Tg" refers to a Tg as determined by differential scanning calorimetry (DSC), including preheating the polymer to 120 °C, rapidly cooling it to -100 °C, and then heating to 150 °C at a heating rate of 20 °C/ minute while collecting data. The Tg recorded was the midpoint of the inflection using the half-height method.

As used herein, unless otherwise indicated, the term "emulsion polymer" refers to a polymer made by aqueous emulsion polymerization.

As used herein, the term "ethylenically unsaturated carboxylic acid monomer" refers to acrylic acid, methacrylic acid, beta-acryloxypropionic acid, ethacrylic acid, α-chloroacrylic acid, α-vinylacrylic acid, crotonic acid, α-phenylacrylic acid, cinnamic acid, chlorocinnamic acid, β-styrylacrylic acid, maleic acid, itaconic acid, citraconic acid, and salts thereof.

As used herein, the term "(meth)acrylate" means acrylate, methacrylate, and mixtures thereof and the term "(meth)acrylic" used herein means acrylic, methacrylic, and mixtures thereof.

As used herein, unless otherwise indicated, the phrase "molecular weight" refers to the weight average molecular weight as measured by gel permeation chromatography (GPC) against a poly(methylmethacrylate) or poly(styrene) standard, respectively, for an acrylic or a vinyl emulsion polymer, and against a poly(acrylic acid) for a polyamine.

As used herein, the term "naturally derived plasticizer" refers to any animal-derived oil, fish-derived oil, plant-derived oil, alkyl esters thereof, glycerides thereof, and mixtures thereof.

As used herein, unless otherwise indicated, the term "normal boiling point" refers to the boiling point of a liquid at 760mm/Hg.

As used herein, the term "pigment volume concentration" or %PVC refers to the quantity calculated by the following formula:

$$\%PVC = \frac{(\text{volume of pigment(s)} + \text{volume extender(s)} + \text{volume of filler(s)})}{(\text{Total dry volume of paint})} \times 100$$

As used herein, the term "polymer" refers, in the alternative, to a polyurethane in a PUD, a polyurethane prepolymer in a PUD, a vinyl or acrylic emulsion polymer made from one or more different monomers, such as a copolymer, a terpolymer, a tetrapolymer, a pentapolymer etc., or any of a random, block, graft, sequential or gradient polymer.

As used herein, the term "total polymer solids" or "polymer solids" means the total solids of the one or more vinyl or acrylic emulsion polymers and the polyurethanes or polyurethane prepolymers in the aqueous compositions.

As used herein, the term "road" includes any indoor or outdoor solid surface that is or may be constantly or intermittently traveled on by pedestrians, moving vehicles, tractors, or aircraft. Some non-limiting examples of a "road" include highways, streets, driveways, sidewalks, runways, taxiing areas, tarmac areas, and parking lots.

As used herein, the phrase "wt.%" stands for weight percent.

As used herein, unless otherwise indicated, the term "weight average particle size" means the particle size as determined by light scattering (LS) using a Brookhaven 90 Plus particle size analyzer, Brookhaven Instruments Corp. (Holtsville, NY).

The present inventors have found that a low level addition of one or more polyurethane dispersions (PUD)s to aqueous vinyl or acrylic emulsion polymer compositions enable traffic paint compositions that can significantly improve early dirt pickup resistance and whiteness retention of traffic paint markings. The compositions of the present invention comprise low PUD levels, which increases their economy in use. The present inventors have found that amounts of PUD above the amounts of the aqueous compositions of the present invention can lead to poor dry time results and paint stability issues. The combination of dry time and low VOC is particularly important in traffic paint compositions which have a high %PVC and are used outdoors. With such aqueous compositions, the high solids content, for example, 50-90 wt.% or, preferably, 60 to 85 wt.% total solids, means that the compositions containing one or more PUDs can lose stability or may have an undesirable grit and/or sediment level. Stability is important in aqueous compositions for use in traffic paint because the compositions are applied at remote locations, virtually anywhere, and so must be made and then shipped to the point of use.

The aqueous compositions of the present invention have low total polymer solids proportions of from 10 wt.% to 40 wt.%, or, preferably, 15 wt.% or more, or, preferably, up to 25 wt.%, all wt.%s based on the total weight of the wet formulation.

Suitable concentrations of fillers, extenders and/or pigments may range from 50 to 90 wt.% or, preferably, from 60 to 85 wt.%, of total solids of polymer, coalescent, filler, extender and pigment.

The (i) vinyl or acrylic emulsion polymers of the present invention may be prepared from a wide range of suitable polymerizable ethylenically unsaturated monomers, such as, for example, nonionic ethylenically unsaturated monomers, including arylenes, such as styrene, vinyl toluene, and $\alpha$-methyl styrene; butadiene; olefins; vinyl esters; vinyl halides; vinylidene chloride; (meth)acrylonitrile; $C_1$-$C_{40}$ alkyl esters of (meth)acrylic acid; for example, methyl (meth)acrylate, ethyl (meth)acrylate, n-butyl (meth)acrylate, 2-ethylhexyl (meth)acrylate, and other (meth)acrylates.

Suitable polymerizable monomers for making the vinyl or acrylic emulsion polymers of the present invention may further include at least one multiethylenically unsaturated monomer. Examples of multiethylenically unsaturated monomers that may be used include allyl (meth)acrylates; glycol di(meth)acrylates; and aromatic di- and tri- vinyl monomers, such as, divinylbenzene, and divinyltoluene.

Optionally, vinyl or acrylic emulsion polymers may further contain as polymerized units, ionic ethylenically unsaturated monomers such as amide containing monomers, like (meth)acrylamide, and ethylenically unsaturated carboxylic acid monomers, such as (meth)acrylic acid.

Preferably, the vinyl or acrylic emulsion polymers of the present invention comprise copolymerized ethylenically unsaturated carboxylic acid monomers. When such acid monomers are in their deprotonated form, as at a pH below the pKa of the acid monomers themselves, they can be referred to as anionic monomers.

Suitable levels of copolymerized ethylenically unsaturated carboxylic acid monomers in the vinyl or acrylic emulsion polymers of the present invention may range from 0 to 10 wt.%, preferably, 0.1 to 5 wt.%, and, more preferably, 0.5 to 2.5 weight %, based on the dry weight of the vinyl or acrylic emulsion polymers.

The vinyl or acrylic emulsion polymers of the present invention may optionally have one or more acid functional groups chosen from a phosphorus acid-functional group, a sulfur acid functional group, a polymeric side chain containing multi-acid functional groups, salts thereof, and combinations thereof. The phosphorus acid-functional group may be a (di)hydrogen phosphate group, phosphonate group, phosphinate group, alkali metal salt thereof, other salt thereof, or a combination thereof. The vinyl or acrylic emulsion polymers may contain such acid functional groups at levels ranging from 0.0 to 10 wt. %, preferably, up to 5 wt. %, and, more preferably, up to 3.5 wt. %, based on the weight of the copolymer.

Suitable phosphorus acid group containing monomers may include, for example, (di)hydrogen phosphate esters of an alcohol containing a polymerizable vinyl or olefinic group, such as phosphates of hydroxyalkyl(meth)acrylates including hydroxyethyl (meth)acrylate. Other suitable such monomers may include, for example, phosphonate functional monomers, like vinyl phosphonic acid. Preferred phosphorus acid monomers include phosphoethyl (meth)acrylate.

Acid functional groups may also include multi-acid functional groups that are formed from ethylenically unsaturated monomers and that contain multiple acid groups. The multi-acid functional groups may be incorporated into the polymer particle, for example, by including as polymerized units, a terminally unsaturated multiacid macromonomer.

Alternatively, a vinyl or acrylic emulsion polymer may be functionalized post-polymerization to give acid functional groups.

Other suitable polymerizable monomers for making the vinyl or acrylic emulsion polymers of the present invention may include, for example, hydroxy-, amine-, epoxy-, and keto- functional monomers, autooxidizable monomers like acetoacetoxyalkyl (meth)acrylates, and small amounts of adhesion-promoting monomers; as well as polymerizable surfactants, including, but not limited to, the monomers sold as Trem™ LF-40 (Henkel Corporation, King of Prussia, PA).

To limit the water sensitivity of the vinyl or acrylic emulsion polymers, the total amount of phosphorus acid, multi-acid, acid, hydroxyl, amine, ketone, aldehyde, aldol, keto-ester (acetoacetoxy), or aldimine group functional groups in the copolymer should not exceed 25 wt.%, or, alternatively, should not exceed 20 wt.%.

The vinyl or acrylic emulsion polymers useful in the aqueous compositions of the present invention may be prepared by conventional polymerization processes, including suspension or emulsion polymerization at known polymerization temperatures of from room temperature to about 90 °C which may be optimized for the catalyst system employed. The vinyl or acrylic emulsion polymers may have a unimodal or a multimodal, including a bimodal, particle size distribution.

Suitable emulsion polymerization techniques are well known in the polymer arts, and may include single stage processes and multiple stage polymerization processes. In the latter case, the first stage polymer can be prepared by various techniques, such as solution polymerization, bulk polymerization or emulsion polymerization. Preferably, emulsion polymerization is used.

The emulsion polymerization techniques used for preparing multi-stage polymer particles are well known in the art and are disclosed, for example, in the U.S. Pat. Nos. 4,325,856, 4,654,397 and 4,814,373.

Polymerization may be carried out using one or more water-soluble or water-insoluble polymerization initiator which thermally decompose(s) at the polymerization temperature to generate free radicals, such as, for example, persulfates, like ammonium or alkali metal (potassium, sodium, or lithium) persulfate.

Polymerization initiators may be used alone or as the oxidizing component of a redox system, which also includes a reducing component, such as, for example, ascorbic acid or sodium formaldehyde sulfoxylate. Examples of redox catalyst systems include t-butyl hydroperoxide/ sodium formaldehyde sulfoxylate/Fe(II), and ammonium persulfate/sodium bisulfite/sodium hydrosulfite/Fe(II). The initiator and the optional reducing component may be used in proportions from 0.001% to 5% each, based on the weight of the ethylenically unsaturated monomers in the monomer mixture to be polymerized. Accelerators such as chloride and sulfate salts of cobalt, iron, nickel, or copper may be used in small amounts.

Chain transfer agents, such as mercaptans, polymercaptans, and polyhalogen compounds, including alkyl mercaptans such as n-dodecyl mercaptan, may be used to control the molecular weight of the polymers. Amounts of these may range from 0 to 10wt.%, based on the total weight of the ethylenically unsaturated monomers used to prepare the vinyl or acrylic emulsion polymers.

Aggregation of the copolymers may be discouraged by including a stabilizing surfactant in the polymerization mixture in the polymerization vessel. Many examples of surfactants suitable for emulsion polymerization are given in McCutcheon's Detergents and Emulsifiers (MC Publishing Co., Glen Rock, N.J.), published annually. Other types of stabilizing agents such as protective colloids, may also be used. For example, methyl cellulose and hydroxyethyl cellulose may be included in the polymerization mixture.

The vinyl or acrylic emulsion polymers may be prepared as an aqueous dispersion or suspension with a solids level of from 20 to 70 wt.%, preferably in the range of from 30 to 60 wt. %.

Preferably, to insure film formation in use without requiring excessive amounts of coalescing solvents, the vinyl or acrylic emulsion polymer may have a measured Tg in the range of from -10 °C to 60 °C.

Preferably, the (i) vinyl or acrylic emulsion polymer of the present invention includes one or more anionically stabilized emulsion polymers. In such cases, the aqueous compositions may further comprise one or more polyamine, which can be part of the anionically stabilized emulsion polymer, and a volatile amine.

The negative charge on the anionically stabilized emulsion polymer particles can be obtained in any of several ways. Anionically stabilized emulsion polymers may contain functional groups that are anionic when deprotonated, may be stabilized by anionic surfactants during or after polymerization, or any combination of two or these can be used. Suitable functional groups that are anionic when deprotonated may include, for example, carboxylic acids, anhydrides, and aldehydes. Suitable surfactants for stabilizing anionically stabilized emulsion polymers may include, for example, anionic surfactants, such as, for example, alkali or ammonium alkyl sulfates and oxyethylated alkyl phenol sulfates, non-ionic surfactants, or mixtures of anionic and non-ionic surfactants.

Anionically stabilized emulsion polymers may contain, as polymerized functional groups that are anionic when deprotonated, up to 10 wt.%, for example, up to 7.5 wt.%, and, preferably, 0.1 wt.% or more, or, preferably, up to 5.0 wt.%, of one or more (ethylenically unsaturated carboxylic acid monomer, for example, carboxylic acid, carboxylic anhydride, phosphorus acid group containing monomers, sulfur containing acid monomers, and mixtures thereof.

The polyamine may be any of a polyfunctional amine polymer, such as a polyimine, an amine post functionalized emulsion polymer, a polyamine functional emulsion polymer with pendant amine-functional groups, and an emulsion polymer with pendant strong cationic groups, such as quaternary amine groups, and weak acid groups. The choice of polyamine is not critical as long as it is a polyamine polymer.

The polyamine may comprise an emulsion polymer which contains both acid and amine groups, in which case no separate polyfunctional amine is needed in the binder composition. For example, the anionically stabilized emulsion polymer can contain, as polymerized units, up to 10 wt.%, for example, up to 7.5 wt.%, and, preferably, 0.1 wt.% or more, or, preferably, up to 5.0 wt.% of amine-functional monomers.

Suitable polyamines may be obtained by known solution polymerization methods in aqueous media, either neutral, alkaline, or acidic, depending upon the particular polymer sought, for example, as taught in U. S. Pat. No. 4,119,600. Such polyamine polymers may include, for example, poly(oxazolidinylethyl methacrylate), poly(vinylamine), polyalkyleneimine, e.g., poly(ethyleneimine), and polymers containing pendant amine groups or strong cationic groups. Polymers prepared using imine monomers contain no imine functionality and, instead, contain amine functionality as part of the polymer backbone.

Suitable polyamine polymers may comprise emulsion polymers from, as polymerized units, two or more ethylenically unsaturated monomers comprising one or more amine containing monomers. The polyfunctional amines include copolymers with up to 80 wt.% of one or more nonionic ethylenically unsaturated monomer, such as any used to form the vinyl or acrylic emulsion polymer, preferably, (meth)acrylamide and methyl acrylate.

Examples of the amine containing monomers for making polyamine polymers include aminoalkyl vinyl ethers or sulfides; amine containing acrylamide or (meth)acrylic esters, such as dimethylaminoethyl (meth)acrylate; N-(meth)acryloxyalkyl-oxazolidines, such as poly(oxazolidinylethyl methacrylate), N-(meth)acryloxyalkyltetrahydro-1,3-oxazines, and monomers that readily generate amines by hydrolysis, as disclosed in U. S. Pat. No. 5,804,627. U.S. Pat. No. 5,672,379 discloses additional polyfunctional amines.

The amine or cationic functional groups pendent to a polyamine emulsion polymer may be introduced by post functionalizing the polymer with amines. For example, an emulsion polymer polymerized from monomers containing 1, 3-dicarbonyl moieties, e.g., AAEM in the range of 0.5 wt.% to 20 wt.%, preferably up to 12 wt.%, can be reacted with polyamines which contain one and only one amine per molecule capable of reacting with 1,3-dicarbonyl compounds and at least one other amine which is incapable of reacting with 1,3-dicarbonyl compounds to form enamines all in weight percentages based on total weight of polymer solids.

Suitable amounts of the polyamine may range from 0.1 to 10 wt.%, based on the total weight of the anionically stabilized emulsion polymer, preferably 0.2 wt.% or more, or, preferably, 5.0 wt.% or less, and, more preferably, 0.5 wt.% or more or, more preferably, 2.0 wt.% or less.

The polyamine may be present in a composition, or it may be added as a separate component before, during or after the composition is applied to a substrate.

In the aqueous binder compositions, the type and amount of volatile base used is not critical so long as the base volatilizes in use conditions, e.g., under air drying conditions, and the amount is sufficient to raise the pH of an anionically stabilized emulsion polymer binder composition to the point where a desired proportion of the polyamine is in a non-ionic state (deprotonated) at all times prior to use. In the non-ionic state (i.e., deprotonated), polyfunctional amine interaction with the anionically stabilized emulsion and any other anionic ingredient which may be present in the composition is minimized. Later, during film formation, the volatile base evaporates with the result that the amine moieties of the polyamine become protonated to form ammonium moieties which, in turn, interact with the anionic ingredients to destabilize the coating composition and thereby accelerate drying. Suitably, from 20 to 100 mole % of the amino groups of the polyamines may be deprotonated, preferably from 60 to 100 mole %, more preferably from 80 to 100 mole %, and most preferably from 90 to 100 mole %. Accordingly, suitable pH ranges for fast-drying aqueous dispersions may range from 7.5 to 11, preferably, 9 or higher, more preferably, from 9.5 to 10.7.

Suitable amounts of a volatile base may range from 0.2 to 5 wt.%, based on the total weight of the anionically stabilized emulsion polymer, and the polyfunctional amine. Suitable volatile bases may include any of ammonia, $C_1$-$C_6$ alkyl amines and $C_1$-$C_6$ alkanolamines, such as, for example, butylamine, propylamine, ethylamine, ethylenediamine, trimethyl amine, triethyl amine, diethylamine, diethanolamine, ethanolamine, 2-methylaminoethanol, 2-dimethylaminoethanol, morpholine, and N-methylmorpholine. Preferably, the volatile base is ammonia, or an admixture thereof with other volatile or nonvolatile bases.

The compositions of the present invention further include (ii) one or more polyurethane dispersions (PUD). The polyurethane dispersions of the present invention may be anionic salt functional, non-ionic or anionic polyurethane dispersion. The polyurethane dispersions may be formed by any suitable method, as is known in the art. Polyurethane dispersions can generally be made by reacting one or more organic polyisocyanate(s) having two or more isocyanate groups with one or more organic compound(s) containing isocyanate-reactive groups and an active hydrogen containing organic compound having water dispersible functional groups and at least two active hydrogen functionalities, particularly, a diamine or a polyol or a extended with or containing as a water dispersible group an acid, amine or hydroxyl group.

One suitable polyurethane dispersion may be an anionic polyurethane dispersion that may be prepared by reacting at least one polyol with an organic compound having at least one acid group and at least two active hydrogen functionalities, and one or more polyisocyanate.

The reaction to make the polyurethane dispersions may be carried out in the presence of a catalyst such as an organic tin compound and/or a tertiary amine.

The polyurethane polymers in the PUD of the present invention may be prepared in a "one shot" process in which all of the components may be reacted together, with or without solvent, to form a polyurethane. The reaction temperature may be up to about 150 °C, but is preferably from 50 °C to 130 °C. A more favored route to their formation involves the formation of an isocyanate terminated polyurethane prepolymer followed by chain extension with an active hydrogen-containing organic compound.

Suitable organic compounds having at least one acid group and at least two active hydrogen functionalities (hereinafter the "organic compound") include, for example, 2,2-dimethylolacetic acid and 2,2-dimethylolpropionic acid. Examples of acid groups suitable for the organic compound include, carboxylic acid, sulfonic acid, phosphoric, phosphonic acid and the like. Preferably, the acid group is the carboxylic acid group.

Polyhydric alcohols having two or more hydroxyl groups can be used to make the polyurethane dispersions of the present invention.

The polyurethane dispersions may comprise polyurethanes made from a first polyol, which may be a polyether, a polyester, a polycaprolactam, a polycarbonate or a combination thereof.

Preferably, the polyurethane in the polyurethane dispersions of the present invention contains 40 wt.% or more, preferably, at least 44 wt.%, or, more preferably, at least 50 wt.%, based on the total polyurethane solids, of one or more polyols, wherein the polyols provide soft segments of a high molecular weight of at least 850, preferably at least 1000 and preferably at least 1500.

Suitable polyols include polyethers, such as, for example, polyethylene glycols, polypropylene glycols, or polytetramethylene glycols, or mixtures thereof, having a weight average molecular weight (Mw), such as from manufacturer literature, ranging from 850, or from 1,000, or more preferably ranging from 1,500 or from 2,000, up to a molecular weight of 5,000 or more, preferably up to 3,000, and even more preferably up to 2,000. Preferably, a polyether polyol has a molecular weight greater than 1,000.

Suitable polyols may be a polyester, a polycaprolactam or a polycarbonate, or a mixture thereof, having a molecular weight ranging from 1,500, or from 2,000, up to a molecular weight of 5,000 or more, preferably, up to 4,000, or up to 3,000, or, even more preferably, up to 2,000.

Polyesters suitable for the polyol of the present invention include, for example, the hydroxyl-terminated reaction products of polyhydric alcohols, preferably dihydric alcohols (to which trihydric alcohols may be added), with polycarboxylic, preferably, dicarboxylic acids, or their corresponding carboxylic acid anhydrides. Polyester polyols obtained by the ring opening polymerization of lactones, such as ε-caprolactone, may also be included.

Suitable polycarboxylic acids which may be used for the formation of polyester polyols may be aliphatic, cycloaliphatic, aromatic and/or heterocyclic or they may be substituted (e.g., by halogen atoms), saturated or unsaturated.

Suitable aliphatic dicarboxylic acids include for example, succinic acid and adipic acid.

Suitable polyhydric alcohols which may be used for the preparation of the polyester polyols include, for example, ethylene glycol, propylene glycol, 1,4-butanediol, 1,6-hexanediol, neopentyl glycol, and others known in the art, as well as triols or tetraols such as trimethylolpropane, and pentaerythritol. Polyhydric alcohols may be used to prepare the polyester polyols by polycondensation with the above-mentioned polycarboxylic acids.

Polycarbonates suitable for the polyol of the present invention include, for example, the reaction products of diols such as 1,4-butanediol, 1,6-hexanediol or diethylene glycol with phosgene; with diarylcarbonates such as diphenylcarbonate, or with cyclic carbonates such as ethylene and/or propylene carbonate.

Polycaprolactams suitable for the polyol of the invention include for example, polycaprolactams (nylon 6) containing, (a) a carboxyl group attached to both ends of the polymer chain, (b) a carboxyl group attached to one end and an acetamide group attached to the other end of the polymer chain, (c) an amino group attached to both ends of the polymer chain, (d) a carboxyl group attached to one end and an amino group attached to the other end of the polymer chain. Particularly preferred is (d) above, a polycaprolactam having a carboxyl group attached to one end and an amino group attached to the other end of the polymer chain.

Suitable polyols may also be one or more natural oil polyol derived or extracted from renewable feedstock resources such as natural and/or genetically modified plant vegetable seed oils and/or animal source fats. Examples of preferred vegetable oils include, but are not limited to, for example, those from castor, soybean, olive, peanut, rapeseed, corn, sesame, cotton, canola, safflower, linseed, palm, grapeseed, black caraway, pumpkin kernel, borage seed, wood germ, apricot kernel, pistachio, almond, macadamia nut, avocado, sea buckthorn, hemp, hazelnut, evening primrose, wild rose, thistle, walnut, sunflower, jatropha seed oils, or a combination thereof. Additionally, oils obtained from organisms such as algae may also be used. Examples of animal products include lard, beef tallow, fish oils and mixtures thereof. A combination of vegetable and animal based oils/fats may also be used. Natural oil based polyols may be modified by known processes, such as, for example, epoxidation, hydroxylation, ozonolysis, esterification, hydroformylation, alkoxylation, or combinations thereof. Modified products may be further alkoxylated. The use of ethylene oxide (EO) or mixtures of EO with other oxides, introduces hydrophilic moieties into the polyol. The natural oil based polyols may constitute up to about 90 weight percent of a polyol blend. Combinations of two types or more of natural oil based polyols may also be used.

Suitable polyisocyanates for making the (ii) polyurethane dispersions of the present invention are well known in the art and include aliphatic, cycloaliphatic and/or aromatic isocyanates containing at least 2 isocyanate groups per molecule. Isocyanurate trimers and biurets of polyisocyanates from any suitable polyisocyanate can also be used.

Suitable aliphatic diisocyanates include, for example, hexamethylene diisocyanate and propylene diisocyanate. Suitable cycloaliphatic diisocyanates include, for example, bis(isocyanatomethyl)cyclohexane (ADI), isophorone diisocyanate, and the hydrogenation products of aromatic diisocyanates such as (methyl)cyclohexylene diisocyanate. Suitable aromatic diisocyanates include, for example, toluene diisocyanate and methylene diphenylene diisocyanate, and others known in the art, as well as isomers or isomeric mixtures thereof. Suitable triisocyanates include, for example, the biuret of hexamethylene diisocyanate and water, the isocyanurate of hexamethylene diisocyanate, the product of addition of isophorone diisocyanate to trimethylolpropane.

Preferably, suitable polyisocyanates are aliphatic or cycloaliphatic diisocyanates. Particularly preferred are dicyclohexylmethane diisocyanate, and isophorone diisocyanate.

Before dispersing the polyurethane in water it may be at least partially neutralized with a tertiary amine, such as triethylamine, or an aminoalcohol, such as triethanolamine. After neutralization, the polyurethane may be diluted with deionized water under agitation to yield a finely divided dispersion.

Chain extension of the dispersed polyurethane dispersion with one or more diamine, e.g., ethylene diamine, or alkanolamine may be also carried out using methods well known in the art.

Preferably, the polyurethane in the (ii) polyurethane dispersions of the present invention has a Measured Tg (DSC) of at least 15 °C lower, for example, a Tg of at least 30 °C lower, or at least 40 °C lower, or at least 50 °C lower, or at least 75 °C lower than that of the (i) vinyl or acrylic emulsion polymers of the present invention. Where a polyurethane has multiple glass transition temperatures, the measured Tg of a polyurethane is the lowestsuch thermal transition measured.

The polymer in (ii) polyurethane dispersions of the present invention may have at least one Tg in the range of not more than about 5 °C, preferably not more than 0 °C, more preferably not more than -15 °C or not more than -20 °C, and most preferably not more than -25 °C. Such a Tg may range as low as -100 °C, or as low as -80 °C, or as low as -60 °C, or as low as -50 °C, or as low as -40 °C.

The composition of the present invention includes (iii) one or more coalescent which has a normal boiling point of from 150 °C to no greater than 300 °C. Suitable coalescents may include any that have a boiling point of from 150 °C to no greater than 300 °C and which comprise liquids or fluids under normal use conditions, for example, at ambient temperature.

Examples of suitable coalescents are chosen from diacid esters, phosphate esters, isobutyrate esters, alkyl esters of fatty acids, fatty ethers, fatty glycerides, fatty acid amides, alkoxylates of fatty acids, addition (co)polymer coalescents, and mixtures thereof. Such coalescents, to the extent that they may have a boiling point of from 150 °C to no greater than 300 °C and which comprise liquids or fluids under normal use conditions, may include, for example, ethylene and propylene glycol ethers having a normal boiling point of 150 to 300 °C, for example, butoxyethylene or butoxypropylene (DowanolTM PnB chemical, The Dow Chemical Co., Midland, MI), alkyl, branched alkyl, aryl, oxygenated alkyl, or alkylaryl esters of diacids, such as adipic acids, succinic acids, for example, diethyl adipate; alkyl, oxygenated alkyl, and branched alkyl esters of isobutyrates, e.g., 2,2,4-trimethyl-1,3-pentanediol monoisobutyrate (Texanol™, Eastman Chemical, Kingsport, TN); alkyl, branched alkyl, oxygenated alkyl, or alkylaryl phosphate esters; alkyl or alkoxyalkyl esters of isobutyrates, such as for example, 2,2,4-Trimethyl-1,3-pentanediol diisobutyrate (Texanol™ isobutyrate) or TXIB™ (Eastman); and (branched) alkyl, alkylaryl or alkoxyalkyl esters, glycerides, amides and alkoxylates of fatty acids. In one embodiment of the invention, the coalescent may be added as an independent component during formulation of the aqueous compositions of the present invention.

One suitable boiling point of the coalescent of the present invention ranges from 170 °C, or 180 °C, or 190 °C, up to 300 °C, or 280 °C, or up to 270 °C.

Suitable total amounts of the one or more (iii) coalescent will vary in proportion to the Tg of the copolymer, as more of the coalescent may be needed for a higher Tg copolymer. Suitable amounts of the coalescent may be 4 wt.% or more, or 5 wt.% or more, or 7 wt.% or more, or 10 wt.% or more, based on total polymer solids, and may range up to 30 wt.%, or less than 25 wt.%, or less than 20 wt.%.

Suitable fillers or extenders (iv) may include, for example calcium carbonate, silicas, silicates, like dolomite or aluminum silicates, talcs, nepheline syenite, ceramics like calcium oxide, quartz(ite), glass or polymeric microspheres, cement, and silica sand. Preferred is calcium carbonate and silicates.

Filler and extender amounts may comprise 25-80 %PVC, or, preferably 25-65%, or, most preferably 30-60%. Silica may be used at 0-40 %PVC, preferably 0-25% PVC; nepheline syenite or other aluminum silicates may be used 0-40% PVC, preferably 0-25% PVC.

Suitable pigments (iv) may include titanium dioxide, organic pigments, carbon black and iron oxides.

Inorganic pigment amounts may range from 0-15 %PVC, preferably, from 3-10 %PVC.

Opaque polymers may be used 0-30% PVC, most preferably 0-15% PVC. Opaque polymers are considered pigment and not binder for PVC calculations.

The aqueous compositions include water or water having dissolved therein a low VOC water miscible organic solvent, such as methanol, ethanol and glycol ether. Water is preferred.

The aqueous compositions of the present invention may contain additional ingredients, such as, for example, surfactants, dispersants, thickeners, such as polyvinyl alcohol (PVA), hydroxyethyl cellulose (HEC), associative thickeners, such as, for example, hydrophobically-modified, alkali soluble emulsions (HASE), hydrophobically-modified ethylene oxide-urethane polymers (HEUR), and hydrophobically-modified hydroxy ethyl cellulose (HMHEC), alkali-soluble or alkali-swellable emulsions (ASE), other cellulosic thickeners, and attapulgite clay; rheology modifiers; colorants; plasticizers; crosslinking agents; adhesion promoters, such as silanes, e.g., oxysilanes, amino alkoxy silanes or epoxy alkoxy silanes; tackifiers; dispersants; wetting agents; dyes; sequestering agents; preservatives, biocides and mildewcides; anti-freeze agents; slip additives; waxes; freeze/thaw protectors; defoamers; corrosion inhibitors; anti-flocculants; and ultraviolet light absorbers, such as benzophenone. HEC is the preferred thickener.

Suitable dispersants may include one or more non-ionic, or anionic dispersants, such as, for example, carboxylic acids, and anionic polymers such as homopolymers and copolymers based on polycarboxylic acids, including those that have been hydrophobically- or hydrophilically-modified, e.g., poly(meth)acrylic acid with various comonomers such as styrene, or alkyl(aryl) (meth)acrylate esters.

One or more surfactant may be used to stabilize the emulsion polymerization systems after polymerization of monomers and may be present at levels of from 0.1 to 8 wt.% based on the total weight of monomer in polymerization. Suitable surfactants include cationic, anionic, and non-ionic surfactants.

If the aqueous compositions of the present invention comprise one or more anionically stabilized emulsion polymers, care must be exercised when selecting the type and amount of additives to avoid altering the pH of the composition to an extent that interferes with storage stability or buffering the pH to an extent that after application the pH does not fall sufficiently to initiate protonation of the polyamine.

The aqueous compositions of the present invention may be used in traffic paints, and EIFS systems. The compositions may also be used in architectural and industrial coatings where fast dry time is required, like roof coatings or other exterior coatings. Various applications methods are known in the art, including spraying the composition on the road surface using pressurized spray guns, such as, for example truck mounted spray guns supplied with paint via air pressurized tanks or airless pumps. Other methods include applying the composition by hand using a paint brush or a paint roller. Coatings may be applied in one or more layer. Preferably, the substrate is cleaned prior to application to remove any dirt or sediments. Whether it comprises one layer or more than one layer, a suitable thickness of the dried film generally ranges from 100 $\mu$m to 1500 $\mu$m, preferably 200 $\mu$m or more, and, preferably, up to 600 $\mu$m.

The compositions are suitable for coating or forming films on substrates such, as, for example, roads, and traffic control devices such as guardrails and concrete barriers, roof tops, walls, for example, in exterior insulation finishing systems (EIFS), walkways, runways, parking areas, and indoor floors (such as in factories or shopping malls). Typical building substrates include, for example, masonry, tar, asphalt, resin, concrete, cement, stone, stucco, tile, polymeric materials, metals, such as aluminum, stainless steel, or carbon steel, and combinations thereof. All of the substrates may already have one or more layers of an existing coating or paint which may be fresh or aged.

To improve the visibility of the roadway markings, the methods of the present invention may further include applying glass beads on the layer of the traffic paint or coating while the layer is still wet or by premixing them into the traffic paint prior to application. The glass beads may be applied by known methods, such as, for example, by spraying the glass beads entrained in and conveyed by a jet of air atop the traffic paint layer. The amount of glass beads applied on the coating layer may range from 250-600 g/m$^2$ of the coating layer for visibility at night. Suitable glass beads for roadway markings may have an average particle size ranging from 50 to 1500 $\mu$m.

EXAMPLES:

The following examples illustrate the present invention.

The following materials were used in the Examples:

Texanol™, 2,2,4-Trimethyl-1,3-pentanediol diisobutyrate, a coalescent (Eastman Chemicals, Kingsport, TN);

PUD B comprises the reaction product of an isophorone diisocyanate, Desmophen 2020™, a 2000 Mw (weight average molecular weight) hexane diol polycarbonate commercially available from Bayer AG, Leverkusen, DE), and ethylene diamine. The PUD is >50% polycarbonate soft segment (weight solids on total solids). It is provided at 40 wt.% solids and is n-methyl-2- pyrrolidone (NMP)-free (contains Proglyde™ DMM glycol diether, Dow Chemical).

PUD A is composed of a reaction product of isophorone diisocyanate (IPDI) and Capa™ 2200 (Perstorp, Malmo, Sweden), a 2000 Mw linear polyester diol derived from caprolactone, 1,2 propanediamine and dimethylolpropionic acid. The PUD is 60-65 wt.% polyester diol (total weight solids). It is provided at 40% solids and is NMP-free (contains DMM)

Dowfax™ 2A1 surfactant is an anionic alkyldiphenyloxide disulfonate surfactant at 45 wt.% solids;

Foamaster™ 8034E defoamer (BASF, Ludwigshafen, DE);

Foamaster™ MO 2134 defoamer (BASF);

Tergitol™ 15-S-40 surfactant is a nonionic secondary alcohol ethoxylate surfactant (The Dow Chemical Company, Midland, MI), at 70 wt.% solids;

Orotan™ 850ER LO sodium salt of a polycarboxylic acid dispersant (The Dow Chemical Company), at 30 wt.% solids;

Orotan™ 731A ER sodium salt of a maleic anhydride copolymer dispersant (The Dow Chemical Company) at 25 wt.% solids;

Mapico™ 422 brown iron oxide pigment (Columbian Chemical Co., Brunswick, OH;

AS 238 aqueous solution of an ammonium salt of a phosphonic acid (Lefrant-Rubco SA, Muille-Villette, FR) at 30 wt.% solids;

Tioxide™ TR92 titanium dioxide (Huntsman, Salt Lake City, UT);

Sibelco™ C 300 silica (Sibelco, Compiegne, FR, D10 46.5 micron, D50, 17.0 micron, D90 3.6 micron);

Ropaque™ Ultra E Opaque Polymer, hollow-sphere polymeric pigment (The Dow Chemical Company);

Durcal™ 2 calcium carbonate (Omya, Inc., Cincinnati, OH);

Durcal™ 5 calcium carbonate (Omya, Inc.);

Durcal™ 10 calcium carbonate (Omya, Inc.);

p(OXEMA) is poly(oxazolidinoethylmethacrylate) at 27.0 wt.% solids;

and,

Ammonia is 28 wt.% aqueous ammonia.

Preparation of Emulsion A: The acrylic emulsion polymer A was prepared in the following manner: Under nitrogen atmosphere, 501.7 g of deionized (DI) water heated to a temperature of 89 ° C was combined with 24.9 g of sodium lauryl sulfate and 10.59 g of ammonium bicarbonate dissolved in 92.41 g of DI water. A 94.09 g aliquot of the monomer mixture given below (4.17% of the total monomer mixture) was delivered to the reactor followed by 8.78 g of ammonium persulfate dissolved in 29.4 g of DI water. The remainder of the monomer mixture was added over 65 minutes maintaining a temperature of 87-89 °C.

| Monomer Mixture | grams |
|---|---|
| DI Water | 306.63; |
| Dequest™ 2016 dispersant (CAS number: 3794-83-0, Italmatch Chemicals, Genova, Italy) | |
| Sodium Lauryl Sulfate | 17.64; |
| n-dodecylmercaptan | 25.03; |
| Butyl acrylate | 629.91; |
| Methacrylic Acid | 25.88; and, |
| Methylmethacrylate | 1344.24. |

At the end of the polymerization, 5.0 g of a 0.1 % ferrous sulfate solution was combined with 0.7 g of ethylenediamine tetraacetic acid in 5.0 g of DI water. A mixture of 0.24 g of t-butylhydroperoxide in 17.64 g of water and 1.41 g of isoascorbic aid in 15.12 g of water was added while the reaction product cooled. When the product cooled to 70 °C, 0.47 g of t-butylhydroperoxide in 15.12 g of DI water and 0.47 g of isoascorbic acid in 15.12 g of DI water were added to the reaction product. When the product cooled to 50 ° C, 69.06 g of ammonium hydroxide was added to give a final pH= 10.21. Following neutralization, 100.22 g of p(OXEMA) was added to the reaction product. The resulting emulsion polymer had a solids content of 51.9%, an average particle diameter of 185 nm, and measured Tg of 47 °C. The following test methods were used:

Dry-to-No-Pickup Time (DTNP): Method A: The indicated compositions were applied over 10 cm x 30 cm glass test panels to a paint layer. The thickness of the layer was controlled to 400μm. The test panels were promptly placed in a test chamber (Victor Associates, Inc., Hatboro, PA) and maintained at a desired relative humidity of 85 to 90 % via a pan at the bottom of the test chamber filled with 2 cm of water and allowing the test chamber to equilibrate overnight. The test chamber was equipped with a hygrometer and a temperature indicator, both of which were fastened to the center of the rear wall of the test chamber to ensure balanced measurement. After overnight equilibration with all ports and doors to the test chamber closed, the relative humidity within the test chamber reached 100%. By carefully opening and closing the various ports, the relative humidity within the chamber was then brought to the desired relative humidity. The door of the test chamber was opened briefly at 1 minute intervals to touch the wet paint films lightly with the tip of a clean finger. When the film was dry to a light touch, the panel was taken out of the test chamber and the dry-to-no-pickup time was determined in accordance with ASTM D711 (ASTM International, West Conshohocken, PA, 2010) by rolling a traffic paint drying wheel over the wet film. The end point for the dry-to-no-pickup time is defined as the point in time where no paint adheres to the rubber rings of the test wheel. Dry-to-no-pickup time of less than 20 minutes is considered acceptable.

No-Pick-up Time (NP) Test: A 380 micrometer thick layer of the indicated composition was applied over 10 cms x 30 cms glass test panels, by the method described below. The test panels were then promptly placed in a test chamber (Victor Associates, Inc., Hatboro, PA) and maintained at a relative humidity of 90 % $\pm$ 3%. The test chamber was equipped with a hygrometer and a temperature indicator, both of which were fastened to the center of the rear wall of the test chamber to ensure balanced measurement. The relative humidity of 90 $\pm$ 3% prior to positioning of the test panels inside the test chamber was achieved by filling the pan at the bottom of the test chamber with 2 cms of water and then closing all the ports and doors and then allowing the test chamber to equilibrate overnight. After overnight equilibration, the relative humidity within the test chamber reached 100%. By carefully opening and closing the various ports, the relative humidity within the chamber was brought to 90 $\pm$ 3%. The doors of the test chamber were opened briefly every few minutes to evaluate the No-Pick-up time for the traffic paint composition. The no pick-up time of the layer was determined in accordance with ASTM D711 (ASTM International, West Conshohocken,PA, 2010), by rolling a traffic paint drying time wheel over the wet layer. The end point for no pick-up time is defined as the point in time where no paint adheres to the rubber rings of the test wheel.

Better no-pick-up time is lower, preferably less than 30 minutes at 90% relative humidity, or less than 10 minutes at 50% relative humidity.

Dry-Through Time (DT): A 380 micrometer thick layer of the pigmented coating composition was applied over 10 cms x 30 cms glass test panels, by the method described below. The test panels were then promptly placed in a test chamber (Victor Associates, Inc., Hatboro, PA) and maintained at a relative humidity of 90 $\pm$ 3 %. The test chamber was equipped with a hygrometer and atemperature indicator, both of which were fastened to the center of the rear wall of the test chamber to ensure balanced measurement. The relative humidity of 90 $\pm$ 3% prior to positioning of the test panels inside the test chamber was achieved by filling the pan at the bottom of the test chamber with 2 cms of water and then closing all the ports and doors and then allowing the test chamber to equilibrate overnight. After overnight equilibration, the relative humidity within the test chamber reached 100 %. By carefully opening and closing the various ports, the relative humidity within the chamber was brought to 90 percent $\pm$ 3 percent.

The doors of the test chamber were opened briefly every few minutes to evaluate the dry-through time for the layer of the traffic paint composition. The dry-through time is defined as the time it takes for the layer from its application to the panel until the time the layer is dry enough to be not distorted from a 90 degree thumb twist applied gently or with minimal pressure on the layer.

Better dry-through time is lower, preferably less than 120 minutes at 90% relative humidity, or <30 minutes at 50% relative humidity.

Black Heel Test with Snell Capsule: Coated polyvinyl chloride (PVC) plates were subjected to black heel and scuff marks using a Snell Capsule Test Procedure using a Programmable Snell Tester (Sangyo Co. Ltd., Tokyo, JP). The Snell capsule consists of a hexagon-shaped steel chamber containing six 5 cm x 5 cm carbon black loaded vulcanized natural rubber cubes. Each face of the Snell chamber's hexagon shape can hold in place one of the coated plates. The chamber is attached to a drive shaft and an electric motor which allows the chamber to be rotated along its axis. Each program cycle consists of a clockwise rotation of the chamber for 10 seconds at 60 rpm, stopping, and then a counterclockwise rotation of the chamber for 10 seconds at 60 rpm exposing the coated tiles to a bombardment from the six rubber cubes. The Snell Capsule is rotated for 1000 turns. The coated test samples were evaluated qualitatively as "poor", "good" or "medium" with less discoloration / marking being preferred.

Dirt Pick-Up Resistance (DPUR): The indicated traffic paints were applied at a 300 $\mu$m wet thickness to glass panels and let dry the under the indicated conditions (humidity and temperature). Then, brushed on half of all the panels was a consistent amount of about 1 g of slurry for a surface of 7cm x 10cm. The slurry can consist of a brown iron oxide slurry (staining material) prepared by dissolving 0.05 g of Orotan™ 731A ER dispersant in 250 g of water, adding 125 g of Mapico 422 brown iron oxide and mixing until evenly dispersed before brushing. The slurry can be a carbon black slurry ,prepared by dissolving 0.05 g of Orotan™ 731A ER dispersant in 250 g of water and adding 25 g of carbon black. The slurry is mixed until evenly dispersed before using and is used promptly as sedimentation will occur over time. The brushed slurry was air dried for three hours. The panels were heated to 60 °C for one hour, removed from the heat and allowed to cool at room temp (minimum 1 hour). Each panel was washed under running water while rubbing lightly and evenly with a cheesecloth pad. All excessive iron oxide or carbon black was removed, treating all panels as uniformly as possible. A new cheesecloth was used for each panel. The films were dried at room temperature overnight. Then, dirt pick-up resistance was determined by the calculation of the Delta E for each tested composition. L*, a and b values were measured on original and tested part of the traffic using coated panels. Delta E was calculated for each indicated composition with the formula, below, where $\Delta$ is the total difference between original and tested measurements of L*, a and b:

$$E = \sqrt{(\Delta L^*)^2 + (\Delta a)^2 + (\Delta b)^2}$$

Lower values of Δ E are better and, preferably are <30, more preferably, <20 and most preferably <10.

<u>Whiteness retention</u> is calculated according to the formula 100% * Y final / Y initial where Y is the luminance as measured by Reflectometer Type Novo-Pac™ 45°/0° and as defined in the CIE 1931 XYZ color space created by the <u>International Commission on Illumination</u>. Higher values are preferred, preferably >60, more preferably >70.

Performance of dirt pickup resistance was also be rated qualitatively by eye where lower levels of discoloration are preferred.

Traffic Paints were prepared according to the formulations provided in tables 1, 2 and 3, below. The ingredients were added in the indicated order to a plastic pail while stirring with an overhead mixer (RW28 mixer supplied by IKA, Wilmington, NC). The ingredients of Part I were added sequentially with agitation necessary to maintain a deep vortex. The ingredients of Part II were added sequentially under high shear agitation and then mixed for 15 minutes. The ingredients of Part III were then added sequentially, at an agitation speed necessary to maintain a deep vortex. Once all ingredients were added, the formulation was mixed for 15 minutes. Then, the formulation was let sit at least 24 hours before application.

Unless otherwise indicated, the traffic paints were applied at a 300 μm wet thickness and the panels were let dry under the indicated conditions (humidity and temperature).

As shown in Table 1, below, in Examples 2B and 3, higher levels of PUD (~20 wt.%, based on total polymer solids) mixed with an acrylic emulsion polymer hurts stability in a constant formulation and renders the formulation unusable as shown in viscosity stability (KU) tests (where acceptable levels after heating 2 weeks at 50 deg. C are <125). The Examples 1 and 2 of the present invention show good values of DPUR via whiteness retention.

Table 1: Performance of Compositions with Emulsion Polymer A

| Ingredient | 1 | 2B* | 2 | 3* |
|---|---|---|---|---|
| *Part 1* | | | | |
| Emulsion polymer A | 287.2 | 254 | 287 | 254 |
| PUD A | 40 | 83 | | |
| PUD B | | | 40 | 83 |
| Dowfax™ 2A1 (surfactant) | 3.6 | 3.6 | 3.6 | 3.6 |
| Foamaster™ 8034E (defoamer) | 2.4 | 2.4 | 2.4 | 2.4 |
| Tergitol™ 15-S-40 (surfactant) | | | | |
| AS™ 238 (ammonium phosphonate) | 9 | 9 | 9 | 9 |
| *Part 2* | | | | |
| Tioxide™ TR92 (titania) | 73 | 73 | 73 | 73 |
| Durcal™ 2 (calcium carbonate) | | | | |
| Durcal™ 5 (calcium carbonate) | 373 | 373 | 373 | 373 |
| Durcal™ 10 (calcium carbonate) | | | | |
| Sibelco™ C 300 (silica extender) | 100 | 100 | 100 | 100 |
| *Part 3* | | | | |
| Ropaque Ultra E (opaque polymer) | 57 | 57 | 57 | 57 |
| Ethanol | 11.8 | 11.8 | 11.8 | 11.8 |
| Foamaster™ 8034E (defoamer) | 0.3 | 0.3 | 0.3 | 0.3 |
| Water | 17.7 | 12.9 | 17.2 | 12.4 |
| Texanol™ (coalescent) | 25 | 20 | 25 | 20 |
| **Paint Calculated %PVC** | 60 | 60 | 60 | 60 |
| *Paint Performance* | | | | |
| Initial KU | 87 | 99 | 80 | 99 |
| KU After heating (2 weeks at 50°C) | 101 | >140 | 120 | >140 |

(continued)

| Paint Performance | | | | |
|---|---|---|---|---|
| Early DPUR (4h drying) Iron Oxide | | | | |
| Rating | Very good | - | Good | - |
| Whiteness retention (%) | 75 | - | 65 | - |
| Black heel capsule | | | | |
| Rating | Good | - | Medium | - |
| *Denotes Comparative Example. | | | | |

Table 2: Performance of Formulated Coatings

| Ingredient | 4* | Inventive A | 5* |
|---|---|---|---|
| Part 1 | | | |
| Emulsion polymer A | 318.58 | 281.17 | |
| PUD A | | 40.17 | 410.4 |
| Dowfax™ 2A1 (surfactant) | | 7.13 | |
| Foamaster™ 8034E (defoamer) | 2.4 | 2.4 | 2.4 |
| Tergitol™ 15-S-40 (surfactant) | 1.5 | | |
| Orotan™ 850 ER LO (dispersant) | | 4.46 | 9 |
| AS™ 238 (ammonium phosphonate) | 9 | | |
| Water | 10 | 26.23 | |
| Part 2 | | | |
| Tioxide™ TR92 (titania) | 73 | 73 | 73 |
| Durcal™ 5 (calcium carbonate) | 362 | 362 | 362 |
| Sibelco™ C 300 (silica extender) | 100 | 100 | 100 |
| Part 3 | | | |
| Ropaque Ultra E (opaque polymer) | 57 | 57 | 57 |
| Ethanol | 12 | 12 | |
| Foamaster™ 8034E (defoamer) | 0.3 | 0.3 | 0.3 |
| Water | 10 | | |
| Texanol™ (coalescent) | 35.92 | 30 | |
| Water | 6.8 | 3.8 | |
| 28% Ammonia | 1.5 | | |
| Paint Characterization | | | |
| Calculated %PVC | 60 | 59.7 | 61.1 |
| Volume Solids | 56.6 | 56.8 | 55.4 |
| Weight Solids | 71.6 | 71.6 | 70.6 |
| Paint Performance | | | |
| Early DPUR (4h drying) | | | |
| With Iron oxide slurry (Delta E) | 30.3 | 13.5 | 12.4 |

(continued)

| Paint Performance | | | |
|---|---|---|---|
| With Iron carbon black slurry(Delta E) | 40 | 34.3 | 36.2 |
| Drying time / Finger Test | | | |
| DTNP (23°C 50% HR) | 4 | 7 | 20 |
| DT (23°C 50% HR) | 15 | 17 | 33 |
| DTNP (23°C 90% HR) | 12 | 28 | 140 |
| DT (23°C 90% HR) | 85 | 95 | > 240 |
| * Denotes Comparative Example | | | |

As shown in Table 2, above, addition of low levels (~10 wt.% polymer solids) of PUD in Inventive Example A makes iron oxide DPUR almost as good as 100% PUD in Comparative Example 5; and black carbon/oil DPUR is even better than 100% PUD (Comparative Ex. 5). DPUR is dramatically better than the acrylic emulsion polymer in Comparative Example 4. Meanwhile, the dry time of the inventive A composition is far better than a PUD and is about at acceptable levels. Both paint stability at high volume solids and cost are potential concerns of traffic paint formulation utilizing only PUD as the polymer.

Table 3: Formulation Performance

| EXAMPLE> | E* | F* | G* | H* | 6* | 7 | 8 | 9 |
|---|---|---|---|---|---|---|---|---|
| PVC % | 40 | 50 | 60 | 70 | 40 | 50 | 60 | 70 |
| Part 1 | | | | | | | | |
| EMULSION A | 500 | 422 | 350 | 280 | 444.6 | 379.9 | 315.3 | 250.6 |
| Dowfax™ 2A1 (surfactant) | 0 | 0 | 0 | 0 | 11.3 | 9.6 | 8.0 | 6.4 |
| PUD A | 0 | 0 | 0 | 0 | 63.5 | 54.3 | 45.0 | 35.8 |
| Water | 0 | 0 | 0 | 0 | 30.0 | 25.7 | 21.3 | 16.9 |
| MO 2134 (defoamer) | 2.3 | 2.3 | 2.3 | 2.3 | 2.3 | 2.3 | 2.3 | 2.3 |
| Tergitol™ 15S40 (surfactant) | 3.7 | 3.1 | 2.6 | 2.1 | 0 | 0 | 0 | 0 |
| Orotan™ 850ER LO (dispersant) | 0 | 0 | 0 | 0 | 3.8 | 5 | 6.1 | 7.2 |
| AS 238 | 7.6 | 9.8 | 12 | 14.4 | 0 | 0 | 0 | 0 |
| Water | 0 | 20 | 40 | 60 | 0 | 20 | 40 | 60 |
| Part 2 | | | | | | | | |
| Tioxide™ TR92 TiO$_2$ | 96 | 102 | 107.6 | 115 | 96 | 102.4 | 108.7 | 115 |
| Durcal™ 2 CaCO$_3$ | 120 | 160 | 205 | 250 | 120 | 163.4 | 206.7 | 250 |
| Durcal™ 10 CaCO$_3$ | 240 | 320 | 410 | 500 | 240 | 326.6 | 413.3 | 500 |
| Part 3 | | | | | | | | |
| Ethanol | 11.8 | 12.6 | 13.4 | 14.4 | 11.8 | 12.7 | 13.5 | 14.4 |
| MO2134 (defoamer) | 0.3 | 0.3 | 0.3 | 0.3 | 0.3 | 0.3 | 0.3 | 0.3 |
| Texanol™ (coalescent) | 51.5 | 43.5 | 36 | 28.8 | 47 | 40.2 | 33.4 | 26.6 |
| Total Paint Weight | 1033.2 | 1095.6 | 1179.2 | 1267.3 | 1071.2 | 1142.9 | 1214.3 | 1285.8 |

(continued)

| Part 3 | | | | | | | | |
|---|---|---|---|---|---|---|---|---|
| Comment | | | | | gelled-unusable | | | |
| Theoretical PVC (%) | 40.6 | 51.2 | 61.3 | 70.4 | 40.2 | 50.9 | 60.7 | 69.9 |
| Theoretical VS (%) | 53.7 | 56.2 | 59.1 | 61.8 | 51.7 | 54.7 | 57.7 | 60.8 |
| Dirt Pick-up Resistance (Iron Oxide Delta E) | 20.07 | 17.52 | 11.62 | 17.77 | X | 5.09 | 7.44 | 19.32 |
| *Denotes Comparative Example | | | | | | | | |

As shown in Table 3, above, low %PVC paints (<40%PVC) in Example 6 with PUD/acrylic emulsion polymer blends can have stability problems. However, for inventive PUD acrylic emulsion polymer compositions, the DPUR improves dramatically versus the same acrylic emulsion polymer at a 50 %PVC (see Example 7, compare Ex. F), and at a 60%PVC (see Example 8, compare Ex. G).

**Claims**

1. An aqueous composition for use in traffic markings comprising (i) one or more vinyl or acrylic emulsion polymers having a measured glass transition temperature (measured Tg) of from -10 to 60 °C, (ii) from 3 to 15 wt.%, based on total polymer solids, of one or more polyurethane dispersions (PUD), (iii) from 4.0 to 30 wt.%, based on total polymer solids, of one or more coalescent having a normal boiling point of from 150 to 300 °C, and (iv) one or more fillers, extenders and/or pigments, wherein the composition has a percent pigment volume concentration (%PVC) of from 45 to 80%.

2. The aqueous composition as claimed in claim 1, wherein the (i) one or more vinyl or acrylic emulsion polymer is an acrylic emulsion polymer.

3. The aqueous composition as claimed in claim 1, wherein the (i) one or more vinyl or acrylic emulsion polymers has a measured Tg of from 20 to 60 °C.

4. The aqueous composition as claimed in claim 1, wherein the (i) one or more vinyl or acrylic emulsion polymer is an anionically stabilized emulsion polymer and, wherein the composition further comprises one or more polyamine and one or more volatile base wherein the composition has a pH of 8.0 to 11.

5. The aqueous composition as claimed in claim 1, wherein the composition has a pH of 7.5 to 11.

6. The aqueous composition as claimed in claim 1, wherein the composition comprises (ii) from 6 to 12 wt.% of one or more polyurethane dispersions.

7. The aqueous composition as claimed in claim 1, wherein the (iii) one or more high boiling coalescent is chosen from diacid esters, phosphate esters, isobutyrate esters, alkyl esters of fatty acids, fatty ethers, fatty glycerides, fatty acid amides, alkoxylates of fatty acids, addition (co)polymer coalescents, ethylene and propylene glycol ethers having a normal boiling point of 150 to 300 °C, and mixtures thereof.

8. The aqueous composition as claimed in claim 1, wherein the (iv) one or more fillers, extenders and/or pigments comprises, a pigment combined with one or more fillers and/or extenders.

9. The aqueous composition as claimed in claim 1, wherein the composition has a %PVC of from 45 to 65%.

10. A method of making a traffic marking or other coated substrate comprising applying the aqueous composition as claimed in claim 1 to (a) a road, paved or concrete surface and allowing it to dry to form a traffic marking, or to (b) a concrete surface or a building surface and allowing it to dry to form a coated substrate.

**Patentansprüche**

1. Eine wässrige Zusammensetzung zur Verwendung bei Verkehrsmarkierungen, die Folgendes beinhaltet: (i) ein oder mehrere Vinyl- oder Acrylemulsionspolymere mit einer gemessenen Glasübergangstemperatur (gemessenen Tg) von -10 bis 60 °C, (ii) zu 3 bis 15 Gew.-%, bezogen auf die gesamten Polymerfeststoffe, eine oder mehrere Polyurethandispersionen (PUD), (iii) zu 4,0 bis 30 Gew.-%, bezogen auf die gesamten Polymerfeststoffe, ein oder mehrere Koaleszenzmittel mit einem normalen Siedepunkt von 150 bis 300 °C, und (iv) einen oder mehrere Füllstoffe, Streckmittel und/oder Pigmente, wobei die Zusammensetzung eine Pigment-Volumen-Konzentration in Prozent (PVK in %) von 45 bis 80 % aufweist.

2. Wässrige Zusammensetzung gemäß Anspruch 1, wobei das (i) eine oder die mehreren Vinyl- oder Acrylemulsionspolymere ein Acrylemulsionspolymer sind.

3. Wässrige Zusammensetzung gemäß Anspruch 1, wobei das (i) eine oder die mehreren Vinyl- oder Acrylemulsionspolymere eine gemessene Tg von 20 bis 60 °C aufweisen.

4. Wässrige Zusammensetzung gemäß Anspruch 1, wobei das (i) eine oder die mehreren Vinyl- oder Acrylemulsionspolymere ein anionisch stabilisiertes Emulsionspolymer sind, und wobei die Zusammensetzung ferner ein oder mehrere Polyamine und eine oder mehrere flüchtige Basen beinhaltet, wobei die Zusammensetzung einen pH-Wert von 8,0 bis 11 aufweist.

5. Wässrige Zusammensetzung gemäß Anspruch 1, wobei die Zusammensetzung einen pH-Wert von 7,5 bis 11 aufweist.

6. Wässrige Zusammensetzung gemäß Anspruch 1, wobei die Zusammensetzung (ii) zu 6 bis 12 Gew.-% eine oder mehrere Polyurethandispersionen beinhaltet.

7. Wässrige Zusammensetzung gemäß Anspruch 1, wobei das (iii) eine oder die mehreren hochsiedenden Koaleszenzmittel ausgewählt sind aus Estern zweiwertiger Säuren, Phosphatestern, Isobutyratestern, Alkylestern aus Fettsäuren, Fettethern, Fettglyceriden, Fettsäureamiden, Alkoxylaten aus Fettsäuren, Additions-(Co)-Polymer-Koaleszenzmitteln, Ethylen- und Propylenglycolethern mit einem normalen Siedepunkt von 150 bis 300 °C und Mischungen davon.

8. Wässrige Zusammensetzung gemäß Anspruch 1, wobei der (iv) eine oder die mehreren Füllstoffe, Streckmittel und/oder Pigmente ein Pigment, kombiniert mit einem oder mehreren Füllstoffen und/oder Streckmitteln, beinhalten.

9. Wässrige Zusammensetzung gemäß Anspruch 1, wobei die Zusammensetzung eine PVK in % von 45 bis 65 % aufweist.

10. Ein Verfahren zur Herstellung einer Verkehrsmarkierung oder eines anderen beschichteten Substrats, beinhaltend das Aufbringen der wässrigen Zusammensetzung gemäß Anspruch 1 auf (a) eine Straßenoberfläche, gepflasterte oder betonierte Oberfläche und deren Trocknenlassen, um eine Verkehrsmarkierung zu bilden, oder auf (b) eine betonierte Oberfläche oder eine Gebäudeoberfläche und deren Trocknenlassen, um ein beschichtetes Substrat zu bilden.

**Revendications**

1. Une composition aqueuse pour son utilisation dans des marquages de signalisation comprenant (i) un polymère en émulsion vinylique ou acrylique ou plus présentant une température de transition vitreuse mesurée (Tg mesurée) allant de -10 à 60 °C, (ii) de 3 à 15 % en poids, rapporté aux solides de polymère totaux, d'une dispersion de polyuréthane (PUD) ou plus, (iii) de 4,0 à 30 % en poids, rapporté aux solides de polymère totaux, d'un coalescent ou plus présentant un point d'ébullition normal allant de 150 à 300 °C, et (iv) une charge, un extendeur et/ou un pigment ou plus, où la composition présente une concentration pigmentaire volumique en pourcentage (% CPV) allant de 45 à 80 %.

2. La composition aqueuse telle que revendiquée dans la revendication 1, où ce (i) un polymère en émulsion vinylique ou acrylique ou plus est un polymère en émulsion acrylique.

**3.** La composition aqueuse telle que revendiquée dans la revendication 1, où ce (i) un polymère en émulsion vinylique ou acrylique ou plus présente une Tg mesurée allant de 20 à 60 °C.

**4.** La composition aqueuse telle que revendiquée dans la revendication 1, où ce (i) un polymère en émulsion vinylique ou acrylique ou plus est un polymère en émulsion stabilisé anioniquement et où la composition comprend en sus une polyamine ou plus et une base volatile ou plus où la composition présente un pH de 8,0 à 11.

**5.** La composition aqueuse telle que revendiquée dans la revendication 1, où la composition présente un pH de 7,5 à 11.

**6.** La composition aqueuse telle que revendiquée dans la revendication 1, où la composition comprend (ii) de 6 à 12 % en poids d'une dispersion de polyuréthane ou plus.

**7.** La composition aqueuse telle que revendiquée dans la revendication 1, où ce (iii) un coalescent à point d'ébullition élevé ou plus est choisi parmi des esters de diacide, des esters de phosphate, des esters d'isobutyrate, des esters alkyliques d'acides gras, des éthers gras, des glycérides gras, des amides d'acides gras, des alcoxylates d'acides gras, des coalescents de (co)polymère d'addition, des éthers d'éthylène et de propylène glycol présentant un point d'ébullition normal de 150 à 300 °C, et des mélanges de ceux-ci.

**8.** La composition aqueuse telle que revendiquée dans la revendication 1, où ce (iv) une charge, un extendeur et/ou un pigment ou plus comprend un pigment combiné à une charge et/ou un extendeur ou plus.

**9.** La composition aqueuse telle que revendiquée dans la revendication 1, où la composition présente un % CPV allant de 45 à 65 %.

**10.** Une méthode de réalisation d'un marquage de signalisation ou autre substrat revêtu comprenant le fait d'appliquer la composition aqueuse telle que revendiquée dans la revendication 1 à (a) une surface de route, en dur ou en béton et de la laisser sécher afin de former un marquage de signalisation, ou à (b) une surface en béton ou une surface de bâtiment et de la laisser sécher afin de former un substrat revêtu.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090318596 A, Fu
- US 4325856 A
- US 4654397 A
- US 4814373 A
- US 4119600 A
- US 5804627 A
- US 5672379 A

**Non-patent literature cited in the description**

- **T. G. FOX.** *Bull. Am. Physics Soc.,* 1956, vol. 1 (3), 123
- McCutcheon's Detergents and Emulsifiers. MC Publishing Co,
- *CHEMICAL ABSTRACTS,* 3794-83-0